# FASCICULE DE BREVET EUROPEEN

(11) **EP 2 085 312 B1**
(45) Date de publication et mention de la délivrance du brevet: **03.03.2010**
(21) Numéro de dépôt: 09151071.9
(22) Date de dépôt: 22.01.2009
(51) Int. Cl.: B65B 1/28, B65G 69/18

(54) **Procédé de remplissage sécurisé de nanotubes de carbone, système de remplissage et installation industrielle mettant en oeuvre le procédé**
Verfahren zum sicheren Umfüllen von Kohlenstoff-Nanoröhrchen, System zum Abfüllen und technische Einrichtung zur Durchführung dieses Verfahrens
Method for safely filling of carbon nanotubes, filling apparatus and industrial installation for operating said method

(30) Priorité: 04.02.2008 FR 0850674
(43) Date de publication de la demande: 05.08.2009
(73) Titulaire: ARKEMA FRANCE, 92700 Colombes (FR)
(72) Inventeur: Bordere, Serge, 64110, JURANCON (FR); Gaillard, Patrice, 64370, HAGETAUBIN (FR)
(74) Mandataire: Lhoste, Catherine

(56) Documents cités:
- EP-A- 1 468 917
- US-A- 5 775 544

## Description

L'invention concerne un procédé industriel de remplissage sécurisé de nanotubes de carbone (NTC) dans un récipient à partir d'un autre récipient. L'invention concerne également un système de remplissage mettant en oeuvre le procédé. L'invention concerne aussi une installation de conditionnement sécurisé de nanotubes de carbone, équipée d'un système remplissage selon l'invention.

### Domaine de l'invention.

Les Nanotubes de Carbone (NTC) sont des particules de diamètre compris entre 0,4nm et 50nm et de longueur supérieure à 100 fois le diamètre. Les NTC forment des pelotes de sorte qu'ils se présentent sous la forme d'une poudre de granulométrie dont le diamètre moyen des particules est autour de 400 micromètres.

Le développement de l'activité portant sur les NTC a conduit le déposant en tant que fabriquant de NTC à manipuler des quantités importantes de poudre de NTC et à chercher des solutions pour permettre le.conditionnement des NTC dans des conteneurs et leur transport entre réacteur et trémie de stockage. Cependant, les manipulations des NTC et la conception de systèmes de conditionnement et de transport pourraient éventuellement poser des questions de sécurité vis-à-vis de l'environnement et des personnes, même si à ce jour on ne connaît pas les risques encourus en cas de dispersion de poudre de NTC dans l'air, y compris à faible dose.

En effet, le déposant a rencontré des difficultés en particulier lors du remplissage de NTC d'un récipient vers un autre récipient. Des opérations de remplissage de récipients doivent être mises en oeuvre dès lors que l'on conçoit une installation industrielle de conditionnement des NTC dans des conteneurs.

En effet, le déposant a eu à résoudre le problème du transfert de NTC de façon industrielle sans connaître l'impact des NTC sur l'environnement et les hommes. Pour résoudre ce problème le déposant a choisi une solution qui assure le maximum de sécurité vis-à-vis de l'environnement et qui est compatible avec une mise en oeuvre industrielle.

Dans ce contexte, le déposant a fait le choix d'appliquer le principe de précaution et a recherché une solution de manière à assurer une sécurité maximale lors de transferts de NTC d'un récipient dans un autre récipient à travers une connexion mécanique placée entre les deux récipients. Le déposant a cherché en particulier une solution assurant une sécurité maximale pour les opérations de remplissage de NTC à partir d'un récipient de stockage de NTC vers un autre récipient de conditionnement de façon compatible avec un processus industriel.

Dans cette même démarche, le déposant a recherché une solution présentant un niveau de sécurité maximum dans toute une installation industrielle mise au point pour le transport de la poudre de NTC allant du réacteur de fabrication jusqu'à leur conditionnement dans des conteneurs.

A cette fin, le déposant a mis au point un procédé de remplissage sécurisé selon lequel le couplage entre un récipient contenant les NTC et un récipient destiné à recevoir des NTC, est réalisé au moyen d'un dispositif sécurisé à double vanne.

Un dispositif à double vanne assuré un maximum d'étanchéité et de sécurité par rapport à l'environnement pendant le transfert et également après car les parties à l'air libre des vannes ne sont pas souillées pendant le transfert.

### Etat de la technique.

Dans le document EP 1 468 917, un dispositif de transfert de poudre, granulé, pâte, liquide ou gaz d'un conteneur vers un autre conteneur est décrit. Ce dispositif de transfert est composé d'une vanne en cône obturant l'ouverture d'un conteneur, d'un mécanisme de poussée permettant un déplacement de la vanne cône ; d'une tête d'obturation placée sur l'autre conteneur ainsi que d'un mécanisme permettant le déplacement de la tête à l'intérieur du conteneur sous la poussée de la vanne cône, ce même mécanisme assurant le retour de la tête d'obturation à sa position initiale en l'absence de poussée.

La vanne en cône est déplacée par le mécanisme de poussée type vérin hydraulique, électrique ou pneumatique logé dans un conteneur.

La tête est couplée au mécanisme de retour logé dans l'autre conteneur.

Le mécanisme de poussée de la vanne est logé à l'intérieur du conteneur. Il est donc nécessaire de prévoir une adaptation du conteneur pour permettre la commande de ce mécanisme depuis l'extérieur.

Le dispositif décrit dans ce document, ne concerne pas le transfert de nanotubes de carbone. De toutes façons, ce dispositif de transfert n'est pas adapté aux nanotubes de carbone. En effet, étant à l'intérieur du conteneur, le mécanisme de poussée de la vanne est en contact avec la poudre à transférer. Il y a par conséquent, un risque d'encrassement et de dysfonctionnement d'autant plus important que la poudre à transférer est fine ce qui est le cas avec des nanoparticules telles que les nanotubes de carbone.

D'autre part, ce dispositif n'est pas adapté à un procédé industriel de remplissage de nanotubes de carbone car le dispositif nécessite des conteneurs adaptés pour le passage d'une commande extérieure permettant d'actionner le mouvement de la vanne à cône.

Outre ces inconvénients, le dispositif de transfert composé de ce type de vanne est complexe et encombrant puisqu'il comprend un mécanisme de poussée de la vanne et un mécanisme de retour de la tête, chacun d'eux se déplaçant dans le conteneur qui les abrite et suivant l'axe longitudinal de ce conteneur.

### Résumé de l'invention.

Ainsi, pour assurer.le maximum de sécurité pour le transfert de nanotubes de carbone et apporter une solution industrielle au transfert des NTC d'un lieu vers un autre, le déposant a choisi d'équiper les conteneurs de dispositifs à double vanne comme par exemple un dispositif de type «Buck^{®}» ou « Glatt^{®}». Ces dispositifs sont également connus sous le nom de vanne à papillon. Ce sont des dispositifs compacts se présentant sous forme de deux éléments cylindriques plats, peu encombrant et d'une grande étanchéité. Chaque élément constitue une vanne, l'une étant dite vanne active et l'autre passive.

Jusqu'à présent, les dispositifs double vanne de type «Buck^{®}» ou « Glatt^{®}» ont été utilisés pour des manipulations de faibles volumes de poudres présentant une granulométrie de plus gros diamètre que les NTC, dans des laboratoires pharmaceutiques.

De tels dispositifs comportent une première vanne active et une vanne passive. La commande d'ouverture est à la périphérie de la vanne active du dispositif. L'ouverture du dispositif double vanne ne peut avoir lieu que lorsque les deux vannes sont couplées l'une à l'autre. La commande d'ouverture est verrouillée en l'absence de couplage. L'ouverture et la fermeture du passage entre deux récipients connectés l'un à l'autre par ce type de vanne sont obtenues par des volets en vis-à-vis pivotant autour d'un axe diamétral sous l'action de la commande d'ouverture. Les faces des volets en contact avec les produits contenus dans les récipients ne sont jamais en contact avec l'extérieur. Ainsi, après déconnexion des deux vannes, aucun produit (poudre ou autre) n'est présent sur les faces externes des volets. L'environnement est préservé ainsi pendant le transfert des produits et même après.

L'invention a plus particulièrement pour objet un procédé industriel de remplissage de nanotubes de carbone dans un récipient à partir d'un autre récipient selon lequel le passage des NTC d'un récipient à l'autre est assuré au moyen d'un couplage comportant un dispositif double vanne, chacune des vannes étant couplée à l'un des récipients, lesdites vannes se fermant indépendamment et de façon étanche et ne pouvant être ouvertes que lorsqu'elles sont couplées l'une à l'autre, ledit dispositif étant un dispositif à double vanne à papillon.

Dans le cas de l'application du procédé de remplissage pour effectuer un dosage des NTC, les NTC sont transférés à partir d'un conteneur vers un doseur, le procédé consiste alors à connecter la vanne dite vanne active sur le conteneur et l'autre vanne dite vanne passive sur le doseur.

Dans le cas de l'application du procédé de remplissage pour le conditionnement des NTC dans des conteneurs à partir d'une trémie de stockage, le procédé consiste à coupler une vanne dite vanne active sur la ligne de sortie de la trémie et l'autre vanne dite vanne passive sur le conteneur.

L'invention concerne également un système industriel de remplissage de nanotubes de carbone dans un récipient à partir d'un autre récipient, le système comprend à cette fin un moyen de couplage entre les deux récipients comportant un dispositif à double vanne, une première vanne étant apte à être couplée à l'un des récipients, l'autre vanne étant apte à être couplée à l'autre récipient, chacune des vannes se fermant indépendamment et de façon étanche après mises en place sur les récipients, les deux vannes étant aptes à être couplées l'une à l'autre, ce couplage permettant leur ouverture ; ledit dispositif étant un dispositif à double vanne à papillon.

Au moins une vanne du dispositif à double vanne est active, c'est-à-dire qu'elle comporte la commande d'ouverture. La deuxième vanne est une vanne passive.

Le dispositif double vanne à papillon est plan et compact et comporte des volets en vis-à-vis pivotant autour d'un axe diamétral sous l'action d'une commande d'ouverture en périphérie extérieure de la vanne active.

Le système de remplissage peut comporter un adaptateur de diamètre entre le diamètre d'une vanne et le diamètre d'ouverture d'un conteneur. Un adaptateur peut être fixé sur l'ouverture de chaque conteneur pour permettre le couplage avec les vannes.

L'invention s'applique à tout récipient équipé d'une vanne d'un dispositif double vanne pour permettre le transfert ou remplissage de NTC d'un récipient vers l'autre.

Les récipients de type récipients de stockage sont couplés à la vanne active du dispositif double vanne.

Les récipients de conditionnement des NTC ou autres récipients de transfert sont couplés à la vanne passive du dispositif, celle -ci pouvant être, par exemple, connectée directement sur l'ouverture du récipient.

L'invention concerne également une installation industrielle de conditionnement de NTC dans des conteneurs, ladite installation étant équipée d'un système de remplissage de nanotubes de carbone selon la présente invention.

### Brève description des dessins.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1 représente un schéma d'un système de remplissage de NTC de mise en oeuvre du procédé dans une première application consistant à transférer des NTC d'un premier récipient dans un autre récipient,
- la figure 2 représente un schéma d'une installation industrielle de conditionnement des NTC dans des conteneurs utilisant un système de remplissage de NTC mettant en oeuvre du procédé,
- les figures 3A et 3B représentent les coupes transversales AA du dispositif 30 des figures 4A et 4B, respectivement, dans la position découplée puis couplée ; les figures 3C et 3D représentent les coupes transversales BB de ce même dispositif,
- la figure 5 représente un schéma d'une installation industrielle de conditionnement des NTC avec une ligne de transport pneumatique entre le réacteur 100 et le conditionnement.

### Description détaillée.

Les manipulations des NTC à grande échelle font l'objet du développement par le déposant, d'une installation industrielle allant de la fabrication, c'est-à-dire du réacteur dans lequel on forme les NTC, jusqu'au conditionnement dans des conteneurs de taille variable de 20L à 2000L selon les exploitations envisagées.

La présente invention est faite dans le contexte de ces développements et s'applique au transfert des NTC d'un récipient vers un autre, lorsqu'un récipient doit être couplé mécaniquement à un autre, directement ou à travers une ligne de sortie, qu'il s'agisse d'un récipient de conditionnement ou de tout autre récipients, par exemple, un récipient de dosage.

La description qui est faite dans la suite permet d'illustrer la mise en oeuvre du procédé selon l'invention dans deux applications et le système utilisé pour la mise en oeuvre du procédé.

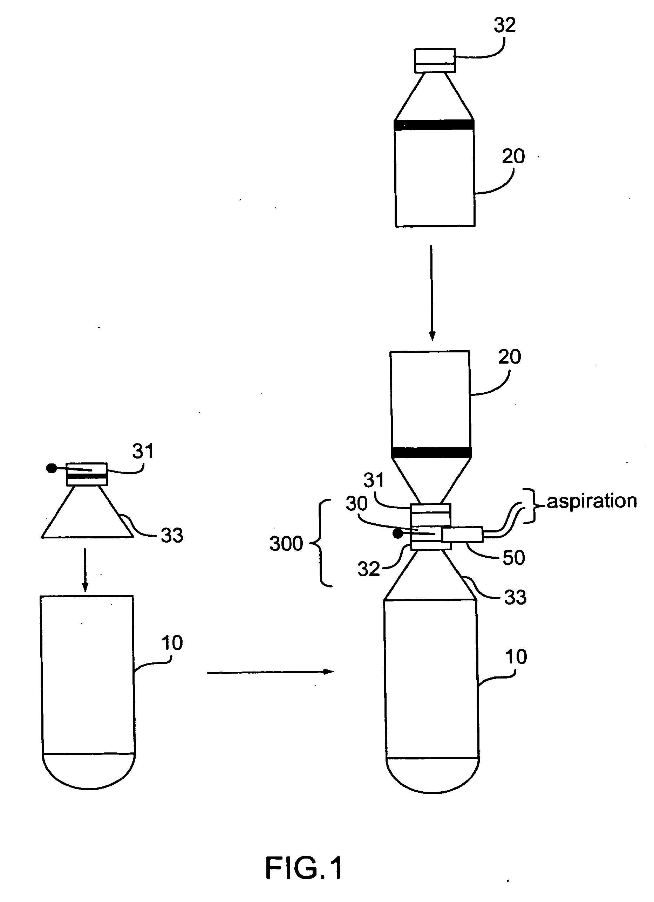

Dans une première application illustrée par le schéma de la figure 1, le procédé et le système de mise en oeuvre permettent le transfert de NTC dans un récipient 20 à partir d'un autre récipient 10 contenant des NTC. Le récipient 20 dans lequel sont transférés les NTC peut être un doseur par exemple. Le récipient 20 est un conteneur de stockage.

Le couplage 300 entre les deux récipients 10, 20 est réalisé par le dispositif à double vanne 30, une vanne 31, et une vanne 32 étant connectée à chaque ouverture des deux récipients.

On peut prévoit un dispositif d'aspiration 50 couplé au dispositif 30 pour retirer tout reliquat de poudre de NTC dans la connexion.

Pour le transport des NTC, il n'est pas nécessaire d'utiliser des conteneurs navette c'est-à-dire des conteneurs dont l'ouverture a le même diamètre que celui des doubles vannes. Des conteneurs de diamètre standard peuvent être utilisées. Pour cela le couvercle du conteneur est retiré. Il est alors prévu que le dispositif de transfert soit équipé d'un adaptateur de diamètre, référencé 33 sur la figure 1. En effet, les diamètres des conteneurs standard sont plus grands que ceux des doubles vannes. L'adaptateur 33 est en forme de cône de sorte que l'une de ses ouvertures est fixée sur le conteneur en lieu et place du couvercle, l'autre ouverture étant fixée à une vanne 31 et/ou 32.

On va décrire maintenant le procédé de remplissage de NTC dans le cas d'une deuxième application qui est le conditionnement des NTC dans des conteneurs.

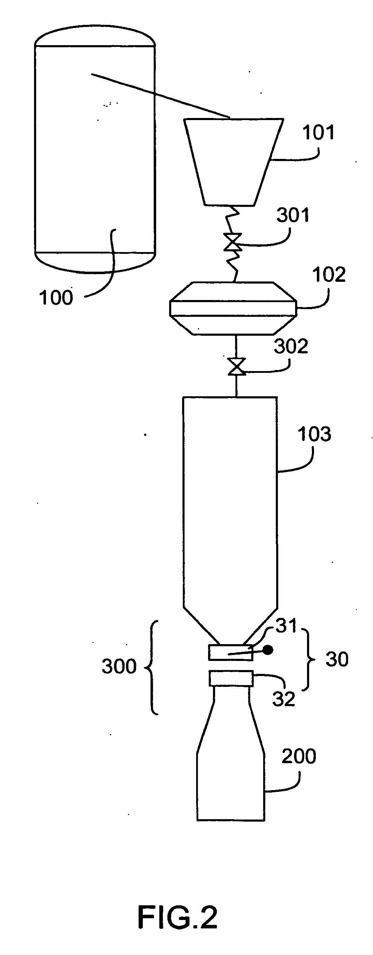

Dans un premier exemple de réalisation pratique illustré par le schéma de la figure 2, le conditionnement est réalisé sans transport des NTC, le transfert se fait d'une trémie de stockage 103 dans laquelle se trouve la poudre de NTC, dans des conteneurs 200. Le couplage mécanique entre la sortie de la trémie 103 et l'ouverture du conteneur 200 est réalisée au moyen du dispositif à double vanne 30 à papillon de type « Buck^{®} » ou « Glatt^{®} ", commercialisée par la société du même nom. Ce dispositif peut comporter un adaptateur de diamètre 33 mis en place sur le conteneur 200 si son diamètre n'est pas identique à celui de la vanne 32.

Les éléments constituant l'installation industrielle I1 du réacteur 100 jusqu'au conditionnement sont :
- un refroidisseur 101,
- un tamiseur 102
- une trémie de stockage 103
- des vannes 301, 302
- un système de remplissage 300 pour le conditionnement comprenant un dispositif à double vanne 30.

Pour obtenir une poudre de très bonne qualité, sans présence de coke, on élimine les plus grosses particules. A cette fin, on place après le refroidisseur, un tamis 102 pour séparer les grosses particules. Ce tamis 102 doit assurer une étanchéité totale et un contact zéro entre l'opérateur et la poudre de NTC, par exemple un tamis compact de la société RITEC. La coupe du tamis est de 2 mm avec un diamètre de tamis de 400 mm pour une surface de filtration de 0,1 m2. Cet outil permet d'avoir un tamisage en continu de la poudre avec un débit élevé, l'avantage de cet appareil, sont ses moteurs latéraux qui permettent d'avoir de plus grandes performances de tamisage.

La trémie 103 est couplée à la sortie du tamis. La trémie a de préférence une forme pyramidale et est faite en acier inoxydable, avec une contenance dans cet exemple de réalisation particulier de 350 L.

Le couplage mécanique 300 permet d'assurer la fonction de remplissage sécurisé entre l'arrivée des NTC issus de la trémie et l'ouverture du conteneur 200 grâce au dispositif à double vanne 30 à papillon.

Les NTC issus de la trémie 103 peuvent, dans une variante non représentée sur ce schéma, traverser une vanne de contrôle. La vanne active 31 du dispositif 30 serait alors couplée à cette vanne de contrôle.

Le conteneur de conditionnement 200 est couplé à la vanne passive 32 du dispositif 30.

Le dispositif à double vanne papillon de type « BUCK » par exemple, permet d'éviter tout contact de la poudre avec l'extérieur, le transfert de la poudre de NTC est ainsi entièrement sécurisé. Grâce à la technologie de ce type de vanne, le mode de transfert de la poudre de NTC est à haut confinement et hors poussière. La conception de cette vanne empêche toute possibilité de contamination et de fuite de la poudre NTC vers l'extérieur.

Dans cet exemple, la vanne passive 32 du dispositif est connectée sur l'ouverture des conteneurs de conditionnement 200, tandis que la vanne active 31 est connectée à la sortie de la trémie de stockage.

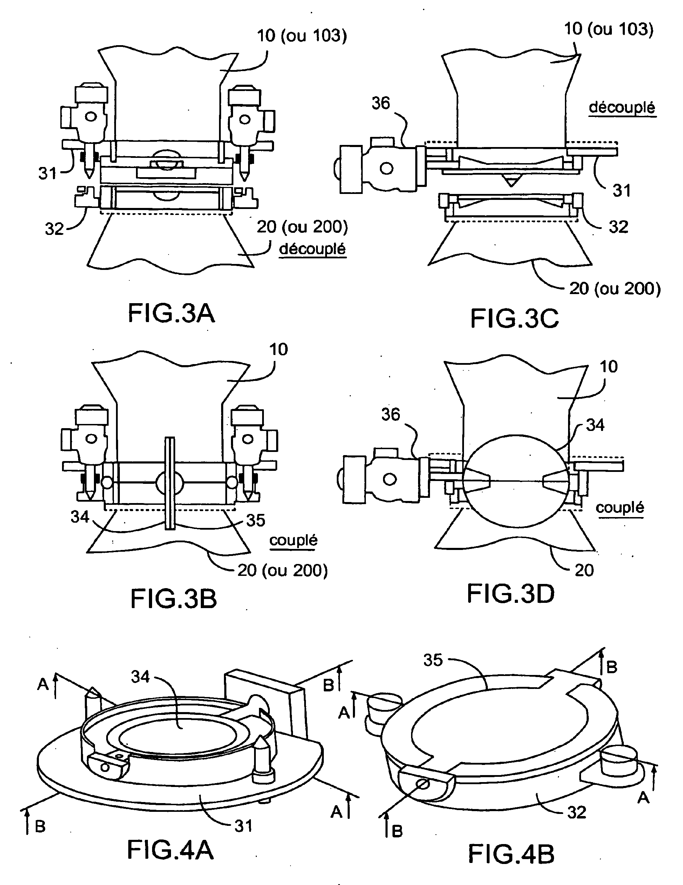

On peut se reporter aux schémas des figures 3A à 3D et 4A à 4D pour comprendre le fonctionnement du dispositif double vanne, décrit ci-après.

Lorsque la vanne passive 32 d'un récipient 20 ou conteneur 200 est couplée à la vanne active 32 recevant les NTC d'un autre récipient 10 (figure 1) ou de la trémie 103 (figure 2), les deux faces externes des volets 34 et 35 des vannes sont accolées ensembles ce qui empêche la poudre de NTC de souiller ces faces. Ainsi, lorsque les vannes 31, 32 sont séparées, les faces des volets 34, 35 se trouvent en contact avec l'extérieur mais n'ont pas été souillées par la poudre.. En outre, le couplage des deux vannes 31, 32 permet de libérer le verrouillage de la commande d'ouverture 36, les volets peuvent alors pivoter sous l'action de la commande. La commande peut être automatique ou manuelle.

L'ouverture de la double vanne permet alors à la poudre de NTC de s'écouler sans aucune fuite extérieure.

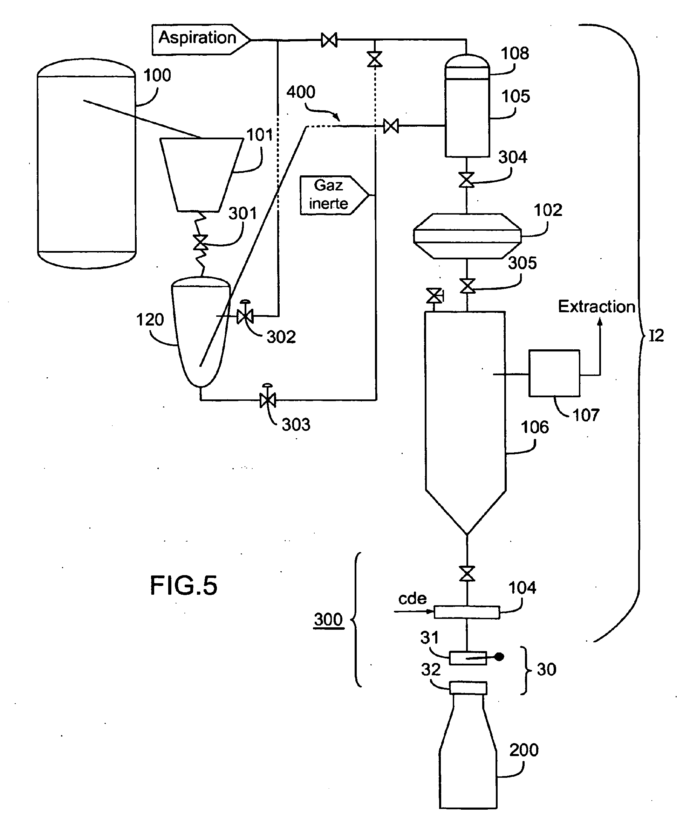

Dans un deuxième exemple illustré par le schéma de la figure 5, le conditionnement est réalisé après transport. Dans ce cas, l'installation I2 comporte un circuit permettant d'amener les NTC du réacteur de fabrication 100 à une trémie de stockage 106 qui est éloignée (par exemple dans un autre bâtiment ou à un autre étage).

Le type de transport choisi est un transport pneumatique en phase dense afin de préserver la qualité de la poudre de NTC et de ne pas générer de fines particules. Le gaz utilisé est de l'air.

Pour assurer toute la sécurité du transport, un fonctionnement a été choisi pour qu'il y ait présence de vide dans le circuit ce qui permet en cas de fuite, de ne pas envoyer de poudre de NTC dans l'atmosphère.

Les éléments constituant l'installation industrielle du réacteur 100 jusqu'au conditionnement sont :
- le réacteur de formation des NTC (100),
- un refroidisseur (101),
- un sas d'expédition (120),
- un transporteur pneumatique (400),
- un sas sous vide (105) avec filtration d'air (108),
- un tamis en ligne (102),
- la trémie de stockage (106)
- une vanne de dosage (104)
- une filtration d'air (107),
- un système de remplissage 300 pour le conditionnement avec un dispositif à double vanne à papillon (dispositif à vannes de sécurité)

Le sas d'expédition 120 permet de récupérer la poudre de NTC produite par le réacteur 100, de rendre inerte cette poudre avec une alternance de vide et d'azote afin d'éliminer toute trace d'éthylène et surtout d'hydrogène avant d'effectuer le transport pneumatique.

Ce sas d'expédition 120 peut aussi être équipé d'un suppresseur pour qu'il puisse fonctionner le cas échéant en refoulement.

La présence d'hydrogène peut être dangereuse en cas de fuite et de contact avec l'air. Le transport des nanotubes de carbone ne sera fait qu'après vérification par un analyseur en ligne de la concentration en éthylène placé en sortie du sas d'expédition 120 (avant transport des NTC). On supposera que s'il n'y a plus d'éthylène, l'hydrogène aura également disparu.

Pour obtenir une poudre de très bonne qualité, sans présence de coke, on élimine les plus grosses particules. A cette fin, on place sur le circuit de transport 400 après le sas sous vide 105, un tamis en ligne 102 pour séparer les grosses particules. Ce tamis 102 doit assurer une étanchéité totale et un contact zéro entre l'opérateur et la poudre de NTC, par exemple un tamis compact de la société RITEC. La coupe du tamis est de 2 mm avec un diamètre de tamis de 400 mm de diamètre pour une surface de filtration de 0,1 m2. Cet outil permet d'avoir un tamisage en continu de la poudre avec un débit élevé, l'avantage de cet appareil provient des moteurs latéraux qui permettent d'avoir de plus grandes performances de tamisage.

La trémie 106 a, de préférence, une forme pyramidale et est faite en acier inoxydable, avec une contenance dans cet exemple de réalisation particulier de 350 L.

Un dispositif de pesage non représenté, pourra permettre de connaître à tout moment la quantité de NTC produite dans le réacteur 100.

L'air apporté en même temps que la poudre de NTC est envoyé vers un dispositif de filtration d'air 107, équipé de filtres très hautes efficacités tels que les filtres HEPA H14. Un filtre HEPA a la capacité de retenir des particules dans l'air d'un diamètre de 0,3 µm avec un taux d'efficacité de 99,995%.

Le système de remplissage pour le conditionnement des NTC offre la possibilité de fournir divers volumes de nanotubes de carbone (petits volumes 1 litre à 10 litres et gros volumes de 60 litres à 200 litres jusqu'à 1 m³ (et en poids de 100 g à 100 kg et plus)), et de travailler en toute sécurité sans manipuler la poudre.

Le couplage mécanique 300 entre l'arrivée des NTC issus de la trémie et l'ouverture du conteneur est réalisée au moyen dispositif à double vanne 30 à papillon (de type « Buck® » ou « Glatt®).

Les NTC issus de la trémie traversent d'abord la vanne de contrôle 104. La vanne active 31 du dispositif 30 est couplée à cette vanne de contrôle 104.

Dans un souci d'éviter l'encombrement, la vanne de contrôle 104 comporte un doseur de type DOSIMAT©. Cette vanne comporte une section DN 150 et est constituée d'un disque circulaire mis en mouvement par un vérin qui par pivotement autour d'un axe permet de dégager un écoulement plus ou moins important de produit à travers une ouverture en forme de « croissant de lune » pouvant varier depuis une fermeture totale jusqu'à une ouverture totale.

Il peut également être prévu de vidanger le conteneur récepteur après transport, dans une trémie réceptrice équipant l'installation qui va utiliser les NTC. Dans ce cas, la trémie réceptrice est équipée d'une vanne active pour permettre le transfert en toute sécurité.

L'installation industrielle qui vient d'être décrite permet de conditionneur de la poudre de NTC en toute sécurité, cette sécurité étant apportée au moment du conditionnement dans les conteneurs mais aussi dans toute la ligne de transport du réacteur jusqu'au dispositif de couplage sécurisé 30.

## Revendications

1. Procédé industriel de remplissage de nanotubes de carbone (NTC) dans un récipient à partir d'un autre récipient selon lequel le passage des nanotubes de carbone (NTC) d'un récipient à l'autre est assuré au moyen d'un couplage (300) comportant un dispositif double vanne (30), chacune des vannes (31, 32) étant couplée à l'un des récipients, lesdites vannes (31, 32) se fermant indépendamment et de façon étanche et ne pouvant être ouvertes que lorsqu'elles sont couplées l'une à l'autre, ledit dispositif étant un dispositif à double vanne à papillon.

2. Procédé de remplissage de nanotubes de carbone (NTC) selon la revendication 1, appliqué au dosage des nanotubes de carbone (NTC), **caractérisé en ce que** l'un des récipients est un conteneur (10) et l'autre un doseur (20), le procédé consistant alors à coupler l'une des vannes dite vanne active au conteneur (10) et l'autre vanne dite passive au doseur (20), la vanne active (31) étant la vanne qui comporte la commande d'ouverture, ladite commande étant verrouillée en l'absence de couplage des deux vannes.

3. Procédé de remplissage de nanotubes de carbone (NTC) selon la revendication 1, appliqué au conditionnement des nanotubes de carbone (NTC), **caractérisé en ce que** l'un des récipients est une trémie de stockage (103 ou 106) et l'autre un conteneur (200), le procédé consistant alors à coupler l'une des vannes dite active à la ligne de sortie de la trémie (103) et l'autre vanne dite passive est couplée au conteneur (200), la vanne active (31) étant la vanne qui comporte la commande d'ouverture, ladite commande étant verrouillée en l'absence de couplage des deux vannes.

4. Système industriel de remplissage de nanotubes de carbone (NTC), dans un récipient à partir d'un autre récipient, le système comprend à cette fin un moyen de couplage entre les deux récipients comportant un dispositif à double vanne (300), une première vanne (31) étant apte à être couplée à l'un des récipients, l'autre vanne (32) étant apte à être couplée à l'autre récipient, chacune des vannes se fermant indépendamment et de façon étanche après mises en place sur les récipients, les deux vannes étant aptes à être couplées l'une à l'autre, ce couplage permettant leur ouverture; ledit dispositif étant un dispositif à double vanne à papillon.

5. Système de remplissage selon la revendication 4, **caractérisé en ce qu'**au moins une vanne (31) du dispositif à double vanne est active, c'est-à-dire qu'elle comporte une commande d'ouverture, la deuxième vanne (32) étant une vanne passive.

6. Système de remplissage selon la revendication 4 ou 5, **caractérisé en ce que** le dispositif double vanne à papillon est plan et compact et comporte des volets (34, 35), en vis-à-vis pivotant autour d'un axe diamétral sous l'action d'une commande d'ouverture en périphérie extérieure de la vanne active (31).

7. Système de remplissage selon la revendication 4 ou 5 ou 6, **caractérisé en ce qu'**il comporte un adaptateur de diamètre (33) entre diamètre du conteneur et diamètre de la vanne (31; 32).

8. Récipient pour système de remplissage selon l'une quelconque des revendications 4 à 7, **caractérisé en ce qu'**il est équipé d'une vanne (31) d'un dispositif double vanne à papillon apte à être couplée à une autre vanne (32) du dispositif, pour le transfert ou remplissage de nanotubes de carbone (NTC) d'un récipient vers l'autre.

9. Récipient selon la revendication 8, **caractérisé en ce que** lorsqu'il constitue un récipient de stockage de nanotubes de carbone (NTC) ledit récipient (10, 103, 106) est couplé à la vanne active (31) du dispositif double vanne.

10. Récipient selon la revendication 8, **caractérisé en ce que** lorsqu'il constitue un récipient de conditionnement des nanotubes de carbone (NTC) ou autre récipient destinataire (200), ledit récipient est couplé à la vanne passive (32) du dispositif.

11. Installation industrielle de conditionnement **caractérisé en ce qu'**elle comporte un système de remplissage de nanotubes de carbone (NTC) selon l'une quelconque des revendications 4 à 7.

12. Installation industrielle de conditionnement selon la revendication 11, **caractérisée en ce qu'**elle comporte en outre :
- un réacteur (100) de formation des nanotubes de carbone (NTC),
- un refroidisseur (101),
- un sas d'expédition (120),
- un transporteur pneumatique (400),
- un sas sous vide (105) avec filtration d'air (108),
- un tamis en ligne (102),
- la trémie de stockage (106)
- une vanne de dosage (104)
- une filtration d'air (107).

## Claims

1. Industrial method for filling a receptacle with carbon nanotubes (CNTs) from another receptacle whereby the carbon nanotubes (CNTs) are passed from one receptacle to the other by means of a coupling (300) comprising a double-valve device (30), each of the valves (31, 32) being coupled to one of the receptacles, the said valves (31, 32) closing independently and tightly and being openable only when they are coupled to one another, the said device being a double-valve device of the butterfly valve type.

2. Method of filling with carbon nanotubes (CNTs) according to Claim 1, applied to the metering of the carbon nanotubes (CNTs), **characterized in that** one of the receptacles is a container (10) and the other is a metering device (20), the method then consisting in coupling one of the valves known as the active valve to the container (10) and the other valve known as the passive valve to the metering device (20), the active valve (31) being the valve that comprises the opening control, the said control being locked when the two valves are not coupled.

3. Method of filling with carbon nanotubes (CNTs) according to Claim 1, applied to the packaging of the carbon nanotubes (CNTs), **characterized in that** one of the receptacles is a storage hopper (103 or 106) and the other is a container (200), the method then consisting in coupling one of the valves known as the active valve to the outlet line of the hopper (103) and the other valve known as the passive valve is coupled to the container (200), the active valve (31) being the valve that comprises the opening control, the said control being locked when the two valves are not coupled.

4. Industrial system for filling a receptacle with carbon nanotubes (CNTs) from another receptacle, the system to this end comprising a means of coupling between the two receptacles, comprising a double-valve device (300), it being possible for a first valve (31) to be coupled to one of the receptacles, it being possible for the other valve (32) to be coupled to the other receptacle, each of the valves closing independently and tightly once they have been fitted to the receptacles, it being possible for the two valves to be coupled to one another, this coupling allowing them to be opened; the said device being a double-valve device of the butterfly valve type.

5. Filling system according to Claim 4, **characterized in that** at least one valve (31) of the double-valve device is active, that is to say that it comprises an opening control, the second valve (32) being a passive valve.

6. Filling system according to Claim 4 or 5, **characterized in that** the double-valve device of the butterfly valve type is flat and compact and has shutters (34, 35) that face one another and pivot about a diametral axis under the action of an opening control on the external periphery of the active valve (31).

7. Filling system according to Claim 4 or 5 or 6, **characterized in that** it comprises an adapter (33) to adapt the diameter of the container to the diameter of the valve (31; 32).

8. Receptacle for a filling system according to any one of Claims 4 to 7, **characterized in that** it is fitted with a valve (31) of a double-valve device of the butterfly valve type, which valve is able to be coupled to another valve (32) of the device in order to transfer carbon nanotubes (CNTs) from one receptacle to the other or fill one receptacle with carbon nanotubes (CNTs) from another.

9. Receptacle according to Claim 8, **characterized in that** when it constitutes a carbon nanotubes (CNTs) storage receptacle, the said receptacle (10, 103, 106) is coupled to the active valve (31) of the double-valve device.

10. Receptacle according to Claim 8, **characterized in that** when it constitutes a receptacle into which to package the carbon nanotubes (CNTs) or some other destination receptacle (200), the said receptacle is coupled to the passive valve (32) of the device.

11. Industrial packaging plant, **characterized in that** it comprises a carbon nanotubes (CNTs) filling system according to any one of Claims 4 to 7.

12. Industrial packaging plant according to Claim 11, **characterized in that** it further comprises:
- a reactor (100) in which the carbon nanotubes (CNTs) are formed,
- a cooler (101),
- an airlock (120),
- a pneumatic conveyor (400),
- a vacuum chamber (105) with air filtration (108),
- an in-line screen (102),
- the storage hopper (106),
- a metering valve (104), and
- an air filter (107).

## Patentansprüche

1. Technisches Verfahren zum Umfüllen von Kohlenstoff-Nanoröhrchen (NTC) in ein Behältnis aus einem anderen Behältnis, bei dem der Transfer der Kohlenstoff-Nanoröhrchen (NTC) von einem Behältnis in das andere Behältnis mittels einer Verbindungseinrichtung (300) gewährleistet wird, die eine Doppelventilvorrichtung (30) aufweist, wobei jedes der Ventile (31, 32) mit einem der Behältnisse verbunden ist, die Ventile (31, 32) sich unabhängig und dicht schließen und nur dann geöffnet werden können, wenn sie miteinander verbunden sind, wobei die Vorrichtung eine Vorrichtung mit zwei Klappenventilen ist.

2. Verfahren zum Umfüllen von Kohlenstoff-Nanoröhrchen (NTC) nach Anspruch 1, das auf die Dosierung der Kohlenstoff-Nanoröhrchen (NTC) angewandt wird, **dadurch gekennzeichnet, dass** eines der Behältnisse ein Behälter (10) und das andere Behältnis eine Dosiereinrichtung (20) ist, wobei das Verfahren in diesem Fall darin besteht, eines der Ventile, das als aktives Ventil bezeichnet wird, mit dem Behälter (10) und das andere Ventil, das als passives Ventil bezeichnet wird, mit der Dosiereinrichtung (20) zu verbinden, wobei das aktive Ventil (31) das Ventil ist, das die Betätigungseinrichtung zum Öffnen aufweist, wobei die Betätigungseinrichtung verriegelt ist, wenn die beiden Ventile nicht miteinander verbunden sind.

3. Verfahren zum Umfüllen von Kohlenstoff-Nanoröhrchen (NTC) nach Anspruch 1, das auf das Abfüllen der Kohlenstoff-Nanoröhrchen (NTC) angewandt wird, **dadurch gekennzeichnet, dass** eines der Behältnisse ein Vorratsbehälter (103 oder 106) und das andere Behältnis ein Behälter (200) ist, wobei das Verfahren in diesem Fall darin besteht, eines der Ventile, das als aktives Ventil bezeichnet wird, mit der Ausgangsleitung des Vorratsbehälters (103) und das andere Ventil, das als passives Ventil bezeichnet wird, mit dem Behälter (200) zu verbinden, wobei das aktive Ventil (31) das Ventil ist, das die Betätigungseinrichtung zum Öffnen aufweist, wobei die Betätigungseinrichtung verriegelt ist, wenn die beiden Ventile nicht miteinander verbunden sind.

4. Technisches System zum Umfüllen von Kohlenstoff-Nanoröhrchen (NTC) in ein Behältnis aus einem anderen Behältnis, wobei das System hierzu eine Verbindungseinrichtung zur Verbindung der beiden Behältnisse miteinander aufweist, die eine Doppelventilvorrichtung (300) aufweist, wobei ein erstes Ventil (31) so ausgebildet ist, dass es mit einem der Behältnisse verbunden werden kann, das andere Ventil (32) so ausgebildet ist, dass es mit dem anderen Behältnis verbunden werden kann, jedes der Ventile sich nach der Anbringung am Behältnis unabhängig und dicht schließt, die beiden Ventile so ausgebildet sind, dass sie miteinander verbunden werden können, und diese Verbindung das Öffnen der Ventile ermöglicht, wobei die Vorrichtung eine Vorrichtung mit zwei Klappenventilen ist.

5. System zum Umfüllen nach Anspruch 4, **dadurch gekennzeichnet, dass** mindestens ein Ventil (31) der Doppelventilvorrichtung aktiv ist, was bedeutet, dass es eine Betätigungseinrichtung zum Öffnen aufweist, wobei das zweite Ventil (32) ein passives Ventil ist.

6. System zum Umfüllen nach Anspruch 4 oder 5, **dadurch gekennzeichnet, dass** die Doppelventilvorrichtung mit zwei Klappenventilen flach und kompakt ist und Klappen (34, 35) aufweist, die sich unter der Wirkung einer Betätigungseinrichtung zum Öffnen am äußeren Umfang des aktiven Ventils (31) einander gegenüberliegend um eine längs einem Durchmesser liegende Achse drehen können.

7. System zum Umfüllen nach Anspruch 4, 5 oder 6, **dadurch gekennzeichnet, dass** es einen Durchmesseradapter (33) zur Anpassung des Durchmessers des Behälters an den Durchmesser des Ventils (31; 32) aufweist.

8. Behältnis für das System zum Umfüllen nach einem der Ansprüche 4 bis 7, **dadurch gekennzeichnet, dass** es mit einem Ventil (31) einer Doppelventilvorrichtung mit zwei Klappenventilen ausgerüstet ist, das so ausgebildet ist, dass es zum Transfer oder zum Umfüllen von Kohlenstoff-Nanoröhrchen (NTC) von einem Behältnis in das andere Behältnis mit einem anderen Ventil (32) der Vorrichtung verbunden werden kann.

9. Behältnis nach Anspruch 8, **dadurch gekennzeichnet, dass**, wenn es einen Lagerbehälter für Kohlenstoff-Nanoröhrchen (NTC) darstellt, der Behälter (10, 103, 106) mit dem aktiven Ventil (31) der Doppelventilvorrichtung verbunden ist.

10. Behältnis nach Anspruch 8, **dadurch gekennzeichnet, dass**, wenn es einen Abfüllbehälter für Kohlenstoff-Nanoröhrchen (NTC) oder einen anderen Aufnahmebehälter (200) darstellt, der Behälter mit dem passiven Ventil (32) der Vorrichtung verbunden ist.

11. Technische Abfülleinrichtung, **dadurch gekennzeichnet, dass** sie ein System zum Umfüllen von Kohlenstoff-Nanoröhrchen (NTC) nach einem der Ansprüche 4 bis 7 aufweist.

12. Technische Abfülleinrichtung nach Anspruch 11, **dadurch gekennzeichnet, dass** sie ferner aufweist:
- einen Reaktor (100) zur Erzeugung der Kohlenstoff-Nanoröhrchen (NTC),
- einen Kühler (110),
- eine Förderschleuse (120),
- eine pneumatische Transporteinrichtung (400),
- eine Vakuumschleuse (105) mit Luftfilterung (108),
- ein zwischengeschaltetes Sieb (102),
- den Lagerbehälter (106),
- ein Dosierventil (104),
- eine Luftfilterung (107).
